# EUROPÄISCHE PATENTANMELDUNG

(11) **EP 1 541 421 A2**
(43) Veröffentlichungstag der Anmeldung: **15.06.2005**
(21) Anmeldenummer: 04024710.8
(22) Anmeldetag: 16.10.2004
(51) Int. Cl.: B60R 16/00

(54) **Kraftfahrzeug mit einer Antriebseinrichtung**

(30) Priorität: 08.12.2003 DE 10357237
(71) Anmelder: AUDI AG, 85045 Ingolstadt (DE)
(72) Erfinder: Märkl, Johann, 85128 Nassenfels (DE)
(74) Vertreter: Thielmann, Frank

(57) **Zusammenfassung**

Ein solches Kraftfahrzeug weist zumindest eine Komponente (1,9) auf, die über eine Verbindungseinrichtung (2) zum Austausch von Signale in das Kraftfahrzeug integrierbar ist. Ein Zwischenmodul (5,6) ist zwischen die Komponente (1,9) und die Verbindungseinrichtung (2) schaltbar oder geschaltet und dient zur individuellen Anpassung an kraftfahrzeugspezifische Gegebenheiten.

## Beschreibung

Die Erfindung betrifft ein Kraftfahrzeug mit zumindest einer Komponente, die zum Austausch von Signalen in das Kraftfahrzeug integrierbar ist, mit einer Einrichtung zum Austausch von Signalen und mit einem Zwischenmodul, welches zwischen die Komponente und die Einrichtung schaltbar oder geschaltet ist.

Aus der DE 102 37 167 A1 ist es bekannt über ein als Zwischenstecker oder Zwischenkabel ausgeführtes Zwischenmodul zumindest einen Teil der Verbindungen zwischen einem Kabelbaum-Steckanschluss und einem Steuergeräteanschluss zu unterbrechen. Bei montiertem Zwischenanschluss ist somit ein Fahrbetrieb des Kraftfahrzeuges nur eingeschränkt oder gar nicht möglich, was durch eine entsprechende Abstimmung des Zwischensteckeranschlusses bzw. Zwischensteckers mit einer entsprechenden Software bewirkt werden kann. Ferner ist vorgesehen, dass im Rahmen der Inbetriebnahme des Steuergerätes die Überwachungssoftware zumindest teilweise deaktiviert wird.

Die Erfindung geht von einem oben aufgezeigten Kraftfahrzeug mit einer Antriebseinrichtung aus. Eine solche Antriebseinrichtung weist einen Antrieb, beispielsweise eine Brennkraftmaschine und ein Getriebe auf, denen ein gemeinsames, oder denen jeweils ein separates Steuergerät zur Beeinflussung deren Eigenschaften zugeordnet ist. Diese Steuergeräte sind über eine Einrichtung zum Austausch von Signalen, beispielsweise über elektrische Leitungen eines Kabelbaumes oder über zumindest einen optischen Leiter, und über Steckverbindungen miteinander verbunden. Für jedes Kraftfahrzeug mit einer bestimmten Ausstattung beispielsweise hinsichtlich der Motorisierung, des Getriebes und der Ausstattung sind jeweils besondere Datensätze des elektronischen Steuergerätes - der Antriebseinrichtung und/oder des Getriebes und / oder der Ausstattung - zu erstellen was zeit- und kostenintensiv ist, die Flexibilität in der Fahrzeugfertigung begrenzt und einen hohen logistischen Aufwand implementiert.

Aufgabe der Erfindung ist daher ein Kraftfahrzeug der eingangs genannten Art derart auszuführen, dass diese Probleme zumindest weitestgehend aufgehoben werden.

Die Aufgabe wird erfindungsgemäß durch den Gegenstand des Patentanspruches 1 gelöst.

Vorteile und Weiterbildungen der Erfindung ergeben sich aus der nachfolgenden Beschreibung eines Ausführungsbeispieles anhand der Zeichnungen in Verbindung mit den Unteransprüchen.

### Es zeigt:

Figur 1 ein erstes und
Figur 2 ein weiteres Ausführungsbeispiel der Erfindung.

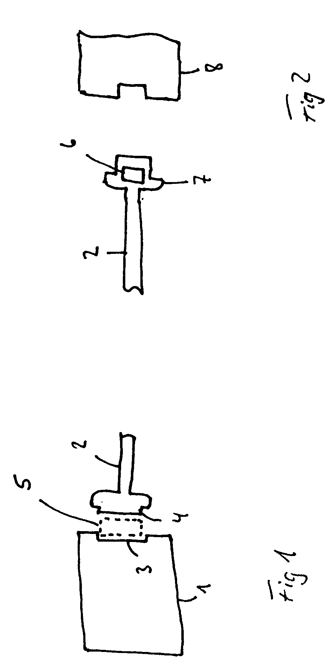

In der Figur 1 ist mit dem Bezugszeichen 1 eine Komponente, beispielsweise ein Steuergerät, gekennzeichnet das, bei alternativer Ausgestaltung, aber auch ein Klimasteuerteil, eine Radioeinrichtung, eine Telefoneinrichtung, ein Infotainmentsystem, eine DVD-Einrichtung oder beispielsweise und nicht abschließend, ein Navigationssystem sein könnte. Es ist gezeigt, dass zwischen der Komponente 1 und einer Verbindungseinrichtung, die als Leitung 2 gekennzeichnet ist und die geeignet ist elektrische oder optische Signale zu übertragen, eine Steckverbindung 3, 4 vorgesehen ist. Über diese Steckverbindung 3, 4 ist die Komponente 1 über die Leitung 2 in den Kabelbaum des Kraftfahrzeuges eingebunden. Nach der Erfindung ist zwischen der Komponente 1 und der Leitung 2 ein Zwischenmodul 5 vorsehbar über das eine spezielle Anpassung der Komponente 1 an die Individualitäten des Kraftfahrzeuges möglich ist.

Aus der Figur 2 geht hervor, dass zusätzlich oder alternativ ein weiteres Zwischenmodul 6 einer weiteren Steckverbindung 7, 8 zugeordnet sein kann um somit beispielsweise von der Leitung 2 übertragene Signale an eine weitere Komponente 9 des Kraftfahrzeuges anpassen zu können. Als weitere Komponente 8 kommen beispielsweise die Antriebseinrichtung, das Getriebe, Fahrwerkskomponenten, und aber nicht abschließend auch Sicherheitseinrichtungen in Betracht. Beispielsweise ist das weitere Zwischenmodul 6 direkt der Leitungsseitigen Steckverbindung 7, 8 zugeordnet.

Ein solches Zwischenmodul 5, 6 weist zur entsprechenden Anpassung einen Fahrzeug und/oder komponentenspezifischen Datensatz auf, über den eine Anpassung möglich ist. Es können somit standardisierte Komponenten 5 und/oder weitere Komponenten 8 individuell und auf einfache Weise an kraftfahrzeugspezifische Auslegungen angepasst werden wodurch sich Kosten- und Zeitvorteile sowie auch eine Reduzierung der Teilezahl ergeben.
Über zumindest ein Zwischenmodul 5, 6 ist insbesondere eine Antriebseinrichtung mit einem Getriebe koppelbar, so dass diese Einheit die gewünschten Eigenschaften aufweist. Ein weiterer Vorteil ergibt sich gemäß der Erfindung dadurch, dass weder die Getriebe- noch Antriebseinrichtungsteuergeräte bei deren Herstellung oder in der Kraftfahrzeugfertigung individuell angepasst werden müssen.

### Bezugszeichenliste

- 1: Komponente
- 2: Leitung
- 3, 4: Steckverbindung
- 5: Zwischenmodul
- 6: weiteres Zwischenmodul
- 7, 8: weitere Steckverbindung
- 9: weitere Komponente

## Patentansprüche

1. Kraftfahrzeug mit zumindest einem Steuergerät,
das über eine Verbindungseinrichtung (2) in das Kfz, zum Austausch von Signalen, integrierbar ist,
**dadurch gekennzeichnet,**
**dass** ein Zwischenmodul (5,6) vorgesehen ist welches zwischen das Steuergerät und die Verbindungseinrichtung (2) geschaltet ist und
**dass** über das Zwischenmodul (5,6) eine individuelle Anpassung an die kraftfahrzeugspezifischen Gegebenheiten erfolgt.

2. Kraftfahrzeug nach Anspruch 1,
wobei im Zwischenmodul (1,5) eine Anpasseinrichtung integriert ist.

3. Kraftfahrzeug nach Anspruch 1 oder Anspruch 2,
wobei über im Zwischenmodul (1,5) gespeicherten Daten eine individuelle Anpassung bewirkbar ist.

4. Kraftfahrzeug nach einem der Ansprüche 1 bis 3,
wobei das Steuergerät einer Antriebseinrichtung, dem Getriebe, zumindest einer Fahrwerkskomponente, zumindest einer Bremskomponente, zumindest einer Komfortkomponente oder zumindest einer Sicherheitseinrichtung zugeordnet ist.

5. Kraftfahrzeug nach einem der Ansprüche 1-4,
wobei das Zwischenmodul (5,6) dem Kabelbaum des Kraftfahrzeuges zugeordnet ist.

6. Kraftfahrzeug nach einem der Ansprüche 1-5,
wobei das Zwischenmodul (5,6) einer Steckverbindung (3,4; 7,8) zugeordnet ist.

7. Kraftfahrzeug nach einem der Ansprüche 1-5,
wobei das Zwischenmodul (5,6) zwischen die Steckverbindung (3,4; 7,8) schaltbar ist.

8. Kraftfahrzeug nach Anspruch 7,
wobei das Zwischenmodul (5,6) als separates Teil ausgeführt ist.
